(19) Europäisches Patentamt
European Patent Office
Office européen des brevets

(11) EP 4 292 699 A1

(12) **EUROPÄISCHE PATENTANMELDUNG**

(43) Veröffentlichungstag:
**20.12.2023 Patentblatt 2023/51**

(21) Anmeldenummer: **23180123.4**

(22) Anmeldetag: **19.06.2023**

(51) Internationale Patentklassifikation (IPC):
***B01J 4/00*** $^{(2006.01)}$ ***B01J 19/00*** $^{(2006.01)}$

(52) Gemeinsame Patentklassifikation (CPC):
**B01J 4/008; B01J 19/0013; B01J 19/0033; B01J 19/245; B01J 19/2465;** B01J 2219/00015; B01J 2219/00033; B01J 2219/0004; B01J 2219/00058; B01J 2219/00162

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **17.06.2022 EP 22179697**

(71) Anmelder: **Fluitec Invest AG**
**8413 Neftenbach (CH)**

(72) Erfinder:
- **GEORG, Alain**
  **8413 Neftenbach (CH)**
- **ANDREOLI, Silvano**
  **8218 Osterfingen (CH)**
- **ROSASCO, Esteban**
  **8353 Elgg (CH)**
- **VÖGELI EHRAT, Tobias**
  **8400 Winterhur (CH)**
- **STEINEMANN, Finn**
  **8200 Schaffhausen (CH)**

(74) Vertreter: **Clerc, Natalia**
**Isler & Pedrazzini AG**
**Giesshübelstrasse 45**
**Postfach 1772**
**8027 Zürich (CH)**

# (54) VORRICHTUNG UND VERFAHREN ZUR DURCHFÜHRUNG EINER NICHT-SELEKTIVEN CHEMISCHEN REAKTION

(57) Eine Vorrichtung zur Durchführung einer nicht-selektiven chemischen Reaktion in einem kontinuierlichen Verfahren mit mindestens teilweiser polytroper Reaktionsführung weist einen Einlauf (3), einen Auslauf (4) und einen zwischen dem Einlauf (3) und dem Auslauf (4) angeordneten Reaktor auf. Der Reaktor weist mindestens zwei in Serie geschaltete Reaktorabschnitte (1) auf, welche eine Strömungsrichtung definieren. Der Reaktor weist mindestens teilweise Plug-Flow Eigenschaften in Strömungsrichtung auf. Es ist mindestens eine Zuleitung (2) für eine kaskadierte Dosierung des Reaktors und eine Rückführungsleitung (14) zur Rückführung eines Teilstroms in den Reaktor vorhanden. Die Rückführungsleitung (14) führt von einer ersten Stelle, die sich zwischen dem Reaktor und dem Auslauf (4) befindet, zu einer zweiten Stelle, die sich zwischen dem Einlauf (3) und dem Reaktor befindet. Die erfindungsgemässe Vorrichtung kombiniert eine kaskadierte Reaktoranordnung mit einem Kreislaufreaktor, der sich über die gesamten Reaktoranordnung erstreckt. Sie ermöglicht dank der im Notfall verwendeten Rückführung eine sichere Durchführung der Reaktion und ermöglicht ferner eine vergleichbare Produktqualität wie bei entsprechenden Semi-batch Prozessen.

Fig. 1

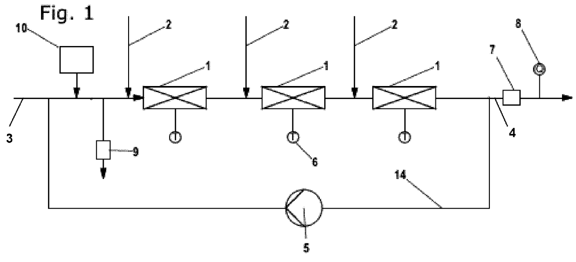

EP 4 292 699 A1

Processed by Luminess, 75001 PARIS (FR)

**Beschreibung**

TECHNISCHES GEBIET

Die vorliegende Erfindung betrifft eine Vorrichtung und ein Verfahren zur Durchführung einer nicht-selektiven chemischen Reaktion in einem kontinuierlichen Verfahren, insbesondere einer skalierbaren Vorrichtung.

STAND DER TECHNIK

Ein chemischer Reaktor ist derjenige Teil einer Anlage, in welchem chemische Prozesse ablaufen und chemische Umsetzungen durchgeführt werden. Solche Reaktoren werden üblicherweise in Batch-Prozessen oder kontinuierlich betrieben. Es sind auch Semibatch-Prozesse bekannt.

Im Batch-Prozess wird eine Materialmenge als Ganzes dem Reaktor zugeführt und ihm nach Abschluss des Produktionsprozesses als Ganzes wieder entnommen. Das Produkt verbleibt somit mit einer engen Verweilzeitverteilung im Reaktor, bis die Reaktion vollständig abgelaufen ist und der nächste Produktionsschritt vollzogen werden kann.

Von einer halbkontinuierlichen Betriebsweise bzw. Teilfliessbetrieb (engl.: semi-batch process) spricht man, wenn man einen Reaktionspartner im Reaktor vorlegt und während der Reaktionsdauer weitere Komponenten zu- oder abführt. Beim halbkontinuierlichen Betrieb wird der Reaktor bezüglich eines Teils der Komponenten kontinuierlich und bezüglich bestimmter Komponenten diskontinuierlich betrieben. Die Verweilzeitverteilung ist hier breit.

Die kontinuierliche Betriebsweise bietet im Vergleich zum Batch-Prozess verschiedene entscheidende Vorteile wie erhöhte Sicherheit und konstantere Produktqualität. Die kontinuierliche Betriebsweise ist von wirtschaftlichem Vorteil, da Reaktorstillzeiten infolge von Befüllungs- und Entleerungsprozessen, wie sie bei Batch- und Semibatch-Verfahren auftreten, überflüssig werden. Zudem können lange Reaktionszeiten infolge sicherheitstechnischer Vorgaben oder zusätzlicher reaktorspezifischer Wärmeaustauschleistungen wie ständige Aufheiz- und Abkühlungsprozesse vermieden werden.

Die Veröffentlichung "Umwandlung diskontinuierlicher chemischer Prozesse in eine kontinuierliche Prozessführung unter Verwendung mikrostrukturierter Reaktoren - Reaktionstechnik und Sicherheit", Chem. Ing. Tech. 2009, 81, No. 1-2 von Peter Hugo und Fernando Lopez zeigt Wege zur Umwandlung von Batch-Prozessen in eine kontinuierliche Betriebsweise auf.

Für die Umwandlung eines diskontinuierlichen Batch-Prozesses lässt sich die reaktionstechnische Analogie zwischen einem diskontinuierlichen Batch-Reaktor (BR) und einem kontinuierlichen Rohrreaktor mit Plug-Flow Eigenschaften (PFR) benutzen. Im isothermen Fall liefern beide Reaktoren den gleichen Umsatz und die gleiche Selektivität, wenn die Damköhler-Zahlen beider Reaktoren gleich sind. Dabei muss bei gleichen Anfangswerten der Konzentrationen die Reaktionsdauer für beide Prozesse gleich sein.

Für die Umwandlung eines diskontinuierlichen Semibatch-Prozesses (SB) lässt sich die reaktionstechnische Analogie zwischen einem kontinuierlichen, kaskadierten PFR Reaktor, auch CCR Reaktor genannt, mit zahlreichen Impfstellen, benutzen. Abschliessend kann das Verweilzeitverhalten eines Kreislaufreaktors mit einem CSTR Reaktor (CSTR = Kontinuierlicher Rührkessel) verglichen werden.

Kontinuierliche Reaktoren, insbesondere Rohrreaktoren, mit Plug-Flow Eigenschaften sind einerseits Leerrohre mit Strömungen, welche je nach Nennweite und Viskosität eine Reynolds-Zahl von mindestens 2’400 bis mindestens 20’000 aufweisen. Andererseits besitzen statische Mischer oder Mischer-Wärmetauscher, wie sie in EP 1 067 ’352, WO 2008/141472, EP 2 ’796 195 und EP 2 286 904 beschrieben sind, in allen Strömungsbereichen Plug-Flow-Eigenschaften.

Man kann sich eine Plug-Flow-Strömung als eine Wanderung einer sehr langen Reihe von sehr dünnen Scheibchen der Reaktionsmasse durch den Reaktor vorstellen. Diese Scheibchen haben keinen Stoff- oder Wärmeaustausch untereinander. Innerhalb des Scheibchens sind alle Konzentrationen und die Temperatur gleich, daher ist eine gute und schnelle radiale Durchmischung von grosser Bedeutung. Es kann von Plug-Flow-Eigenschaften gesprochen werden, wenn eine ausreichende radiale Durchmischung vorherrscht und im Reaktor eine Bodenstein-Zahl > 100 erreicht wird.

Plug-Flow Reaktoren (PFR) lassen sich sowohl mit einer einzelnen Impfstelle pro Feedstrom oder auch kaskadiert, d.h. mit mehreren Impfstellen pro Feedstrom in Serie einsetzen. Der Ausdruck Impfstelle ist der Fachausdruck für die Zuführung der Additive und anderen Stoffen über eine separate Zuleitung. Plug-Flow Reaktoren eignen sich sowohl für selektive als auch für nicht selektive Reaktionen.

Die Selektivität einer chemischen Umsetzung in einem Reaktor gibt an, welcher Anteil des insgesamt umgesetzten Ausgangsstoffes unter Berücksichtigung der Stöchiometrie in das gewünschte Zielprodukt umgesetzt wurde. Anders ausgedrückt beschreibt die Selektivität in der Chemie, wie stark eine Hauptreaktion oder eine gewünschte Reaktion gegenüber anderen möglichen Nebenreaktionen bzw. unerwünschten Reaktionen abläuft. Während der Reaktionsführung können somit Nebenreaktionen in Form von Parallel- oder Folgereaktionen stattfinden, welche das gewünschte Produkt negativ beeinflussen können.

Selektive Reaktionen sind Reaktionen ohne Nebenreaktionen reagieren. Beispielhaft kann dies als Reaktion mit einem Feed A und Feed B zu einem Produkt C sein.

$$A + B \rightarrow C$$

Nicht selektive Reaktionen, auch komplexe Reaktionen genannt, lassen sich vereinfacht wie folgt beschreiben:

- Die Parallelreaktion, auch Konkurrenzreaktion oder Simultanreaktion genannt, ist eine chemische Reaktion, bei der zwei oder mehrere Edukte um andere Ausgangssubstanzen miteinander konkurrieren, wodurch neben den Hauptprodukten weitere häufig unerwünschte Nebenprodukte entstehen.

$$A \overset{k1}{\rightarrow} R \overset{k2}{\rightarrow} S$$

- Die Folgereaktion ist die Fortsetzung einer erwünschten Reaktion zu einer nicht erwünschten Reaktion, wenn die Produkte der ursprünglichen Reaktion weiterhin reaktionsfreudig sind.

$$A + B \overset{k1}{\rightarrow} C \quad \text{erwünscht}$$

$$A + C \overset{k2}{\rightarrow} D \quad \text{nicht erwünscht}$$

Diese Reaktionen werden vereinfacht hauptsächlich durch folgende Parameter beeinflusst:

- die Reaktorschaltung und den Typ des Reaktors,
- die Temperatur oder das Temperaturprofil im Reaktor,
- die Verweilzeit oder die Verweilzeitverteilung im Reaktor,
- die Wahl des Katalysators und
- die Variation der Edukt-Konzentrationen.

Der aktuelle Trend zielt im Moment auf den Einsatz von PFR Reaktoren ab, um diskontinuierliche Prozesse, wie zum Beispiel Semibatch Reaktoren, in kontinuierliche Prozesse umzuwandeln. Dabei verändert man sowohl das Verweilzeitverhalten wie auch das Temperaturverhalten und erzielt in vielen Fällen eine bessere Ausbeute und Selektivität. Will man jedoch einen Semibatch Prozess in einen kontinuierlichen Prozess umwandeln, so erzielt man in einem PFR Reaktor, insbesondere bei nicht selektiven Reaktionen, eine unterschiedliche Produktqualität, welche oftmals nicht erwünscht ist.

Es sind Lösungen bekannt, bei denen anstelle der klassischen kaskadierten Dosierung in einem PFR Reaktor ein Reaktor mit einer Rückführung, ein sogenannter Kreislaufreaktor, zur Anwendung kommt. So beschreibt die EP 2 886 567 A1 eine kaskadierte Dosierung mit mehreren Reaktorsegementen, bestehend aus PFR Reaktorabschnitten und/oder Kreislaufreaktorenabschnitten. Dadurch kann der Betreiber die Produktqualität einstellen. Nachteilig ist jedoch, dass der Betreiber mehrere Pumpen für die einzelnen Kreislaufreaktorabschnitte einsetzen muss. Zudem erfordern mindestens chemische Reaktionen der Sicherheitsklassen 4 und 5 (Einteilung gemäss Stoessel) ein entsprechendes Sicherheitskonzept, wie es beispielsweise in "Planning protection measures against runaway reactions using criticality classes - Francis Stoessel - 2008, Doi:10.1016/j.psep.2008.08.003 beschrieben ist.

CH 705 823 B1 offenbart einen Kreislaufreaktor, d.h. einen Reaktor mit einer Rückführung, mit einem statischen Mischer-Wärmetauscher.

EP 3 417 935 B1 zeigt eine Vorrichtung mit mehreren Reaktorabschnitten, wobei der in Strömungsrichtung erste Reaktorabschnitt eine Rückführung aufweist. Die Vorrichtung weist ein Sicherheitssystem mit Massnahmen zur Verhinderung eines unkontrollierten Reaktionsablaufs mit mehreren zu ergreifenden Massnahmen auf. Insbesondere wird bei Abweichung vom Normalbetrieb der Reaktor gespült, um die Reaktion zu stoppen. Diese Idee ist auf dem Markt im Produkt " Safety Purge System" der Firma Fluitec mixing + reaction solutions AG verwirklicht.

WO 2017 /080909 A1 beschreibt einen PFRR Reaktor, im Fachjargon als "Plug Flow Recycle Reactor" bezeichnet. Der Reaktor weist einen Kreislauf auf. Es sind Mittel vorgesehen, um im Reaktor einen Temperaturanstieg über einen vordefinierten Temperaturbereich, vorzugsweise von mehr als annähernd 50 K zu verhindern. Diese Mittel umfassen Temperatursensoren, die die Temperatur im Reaktor detektieren. Diese Vorrichtung eignet sich besonders für selektive und sehr exotherme Reaktionen. Nachteilig ist jedoch, dass die Qualität des Produktes, zum Beispiel das Molekulargewicht, nur über die Kreislaufrate und über das Volumen des Kreislaufreaktors eingestellt werden kann.

DARSTELLUNG DER ERFINDUNG

Es ist deshalb eine Aufgabe der Erfindung, eine Vorrichtung und ein Verfahren zur Durchführung von nicht-selektiven chemischen Reaktionen zu schaffen, wobei die Reaktion in einem kontinuierlichen Prozess auf sichere Art und Weise durchgeführt werden kann und wobei die der kontinuierliche Prozess eine vergleichbare Produktqualität ermöglicht wie entsprechende Semibatch Prozesse.

Diese Aufgabe lösen eine Vorrichtung und ein Verfahren mit den Merkmalen der Patentansprüche 1 bzw. 12.

Die erfindungsgemässe Vorrichtung zur Durchführung einer nicht-selektiven chemischen Reaktion in einem kontinuierlichen Verfahren mit mindestens teilweiser polytroper Reaktionsführung weist einen Einlauf, einen Auslauf und einen zwischen dem Einlauf und dem Auslauf angeordneten Reaktor mit mindestens zwei in Serie geschalteten Reaktorabschnitten auf, welche eine Strömungsrichtung definieren. Der Reaktor weist mindestens teilweise Plug-Flow Eigenschaften in Strömungsrichtung auf. Es ist mindestens eine Zuleitung für eine kaskadierte Dosierung des Reaktors vorhanden sowie eine Rückführungsleitung zur Rückführung eines Teilstroms in den Reaktor. Die Rückführungsleitung führt von einer ersten Stelle, die sich zwischen dem Reaktor und dem Auslauf befindet, zu einer zweiten Stelle, die sich zwischen dem Einlauf und dem Reaktor befindet.

Die Kombination einer kaskadierten Dosierung innerhalb des Reaktors und eine Rückführung, die sich über den gesamten Reaktor erstreckt, ermöglicht eine Optimierung der Produktqualität und erhöht die Sicherheit des Prozesses. Je nach Ausführungsform erfolgt die Rückführung lediglich als Schutzmassnahme im Notfall und/oder während des Prozesses.

Die Rückführung über den gesamten Reaktor bildet eine vollwertige Schutzmassnahme, d.h. eine vollwertige Schutzebene, zur Sicherstellung eines kontrolliert verlaufenden Prozesses.

Über die mindestens eine Zuleitung, auch Feedstrom oder Impfstelle genannt, lassen sich je nach Reaktion unterschiedliche Stoffe zuführen. Beispiele sind Edukte, Hauptkomponenten, Katalysatoren, Aktivatoren, Additive, Lösungsmittel, Emulsionszusätze. Zumindest eine Zuführung kann auch gasförmig sein.

Die mindestens eine Zuleitung lässt sich an unterschiedlichen Stellen entlang der Strömungsrichtung platzieren.

Die erfindungsgemässe Vorrichtung und das nachfolgend beschriebene erfindungsgemässe Verfahren ermöglichen die Umwandlung eines Semi-batch Prozesses in einem kontinuierlichen Prozess bei einer vergleichbaren Produktqualität. Da Semi-batch Reaktoren kein enges Verweilzeitverhalten aufweisen, lässt sich mittels eines klassischen PFR Reaktors üblicherweise kein Produkt erhalten, das den genauen Spezifikationen gemäss dem Semi-batch Prozess entspricht. Die Kombination der kaskadierten Dosierung mit einem den ganzen Reaktor umfassenden Kreislauf lässt sich dieses Ziel jedoch mindestens annähernd, vorzugsweise genau erreichen. Je nach Reaktion ist es auch möglich, die Produktequalität im Vergleich zum Semi-batch Prozess zu verbessern.

Die Produktqualität lässt sich vom Betreiber mittels zwei Parametern, nämlich mittels der Kreislaufrate und der Art der kaskadierten Dosiertechnik einstellen. Das Vorgehen ist beispielsweise wie folgt:

- In einem ersten Schritt wird kaskadiert dosiert und sich somit der gewünschten Produktqualität angenähert. Je geringer die Anfangskonzentration ist, umso mehr Impfstellen werden benötigt. Es ist jedoch zu berücksichtigen, dass sich die Kosten mit der Anzahl der gewählten Impfstellen erhöhen. Es gilt, einen optimalen Mittelweg zu finden.
- Der Kreislauf ermöglicht jedoch eine Erhöhung des Feedstroms, wodurch eine Verdünnung erzielt wird. Dieser Effekt beeinflusst, speziell bei Reaktionen, bei denen eine Reduktion der Anfangskonzentration erwünscht ist, die Produktqualität.
- Ferner lässt sich beispielsweise durch Wahl eines geeigneten Katalysators die Molmassenverteilung zusätzlich einstellen.

Die erfindungsgemässe Vorrichtung und das nachfolgend beschriebene erfindungsgemässe Verfahren eignen sich insbesondere, jedoch nicht ausschliesslich, für nicht-selektive chemische Reaktionen mit speziellen kinetischen Eigenschaften, wie beispielsweise:

- Parallelreaktionen oder Folgereaktionen,
- Kombinierte Parallel- und Folgereaktionen,
- Reaktionen, bei denen die erwünschte Reaktion eine kleinere Ordnung hat als eine ebenfalls stattfindende unerwünschte Reaktion, wodurch die erwünschte Reaktion eine tiefe Edukt-Konzentration benötigt, um das erwünschte Reaktionsprodukt bilden zu können.

Beim Auslegen des erfindungsgemässen Reaktors kann es einerseits durch die polytrope Reaktionsführung zu hohen Temperaturunterschieden und andererseits durch eine zu hohe Rückführrate zu einer verringerten Selektivität und zu einer schlechten Produktqualität kommen. Beide Parameter, der Temperaturverlauf und die Rückführrate, d.h. der Verdünnungsfaktor, werden deshalb vorzugsweise auf die Reaktion abgestimmt.

Ferner wurde erkannt, dass im Falle einer Kühlpanne, beispielsweise bei Ausfall des Kühlsystems, die Temperaturerhöhung über den ganzen Reaktor kleiner als 100 K, bevorzugt kleiner als 50 K betragen sollte. Ein Überschreiten dieser adiabatischen Temperaturerhöhung entsteht, wenn die Rückführrate bzw. der Verdünnungsfaktor y nach der Gleichung (1) zu gering ist. $U_A$ ist dabei der Gesamtumsatz, wobei dieser in den Reaktorabschnitten verteilt, umgesetzt wird.

Das Produkt aus dem Eintrittsstrom und dem Verdünnungsfaktor y ergibt somit den Rückführstrom, mit dem der Reaktor optimal sicher betrieben werden kann.

$$y = \frac{\Delta T_{adiab} \cdot U_A}{50K} - 1 \qquad (1)$$

Dabei ist die kaskadierte Zuführung, welche zudem die Wärmeproduktion pro Segment bzw. pro Reaktorabschnitt verteilt zu berücksichtigen.

In bevorzugten Ausführungsformen weist der Reaktor der erfindungsgemässen Vorrichtung mindestens zwei, vorzugsweise mindestens drei Schutzebenen

auf. Schutzebenen sind in der Norm DIN EN 61511 definiert. Reaktionen der Klassen 4 und 5 gemäss Stoessel sind gemäss DIN EN 61511 je nach Ausführung mit Schutzebenen gemäss der Sicherheitsanforderungsstufen von SIL 1 bis SIL 3 auszuführen (SIL = Safety Integrity Level).

Eine dieser Schutzebenen ist die überwachte Rückführung über den gesamten Reaktor. Die Überwachung erfolgt vorzugsweise mittels nachfolgend beschriebenen Temperatursensoren und/oder mittels Qualitätsüberwachung am Austritt. Eine Qualitätsüberwachung kann beispielsweise eine IR (Infrarot) Sonde, eine NIR (Nahes Infrarot) Sonde oder eine Raman Sonde sein.

Eine zweite Schutzebene ist beispielsweise eine Notspülung als eine Schutzebene. Als Notspülung lässt sich beispielsweise das eingangs erwähnte Fluitec Safety Purge System verwenden.

Eine dritte Schutzebene sind beispielsweise Sicherheitsventile und/oder Berstscheiben. Weitere mögliche Schutzebenen sind Notkühlung oder Inaktivierung der Reaktion. Die hier genannten dritten Schutzebenen sind schadensbegrenzend.

Das erfindungsgemässe Verfahren und die erfindungsgemässe Vorrichtung sind skalierbar und ermöglichen ein scale-up einer Versuchsanlage zur industriellen Anwendung.

Vorzugsweise ist mindestens ein Teil der Reaktorabschnitte, vorzugsweise sind alle Reaktorabschnitte entweder statische Mischer-Wärmetauscher oder statische Mischer. Vorzugsweise sind die Mischer oder Mischer-Wärmetauscher kühlbar und/oder heizbar. Derartige Mischer, insbesondere die statischen Mischer-Wärmetauscher, wie sie von der Firma Fluitec mixing + reaction solutions AG vertrieben werden, führen die bei der Reaktion entstehende Wärme optimal ab und weisen eine enge Verweilzeitverteilung auf. Letzteres erlaubt es, eine enge Molmassenverteilung zu erzielen. Dies erhöht die Qualität des Produkts. Zudem sind statische Mischer und statische Mischer-Wärmetauscher üblicherweise skalierbar.

Vorzugsweise weisen die der Einlauf, der Auslauf und die mindestens eine Rückführungsleitung eine Bodensteinzahl von grösser als 20 pro Meter auf über die Reaktorabschnitte auf.

In bevorzugten Ausführungsformen ist mindestens ein Temperatursensor vorhanden, der die Temperatur im Reaktor bestimmt. Ferner ist eine Steuerung vorhanden zur Steuerung der Vorrichtung nach Massgabe eines Sensorsignals des mindestens einen Temperatursensors. Dadurch lässt sich verhindern, dass die Temperatur im Reaktor über einen vorbestimmten Temperaturwert ansteigt. Die Rückführungsrate und/oder die kaskadierte Dosierung lassen sich nach Massgabe dieser Temperatur einstellen und verändern. Ein Durchgehen der Reaktion kann dadurch vermieden werden. Dies ist somit ein Mittel zur Verhinderung eines unkontrollierten Reaktionsablaufs, d.h. ein ereignisverhinderndes Mittel.

Vorzugsweise ist in mindestens einem Reaktorabschnitt, vorzugsweise in jede Reaktorabschnitt mindestens ein Temperatursensor angeordnet. Vorzugsweise ist die Steuerung ausgebildet, um eine Rückführungsrate des Teilstroms im Reaktor nach Massgabe des Sensorsignals des mindestens einen Temperatursensors zu steuern. Alternativ oder zusätzlich ist die Steuerung ausgebildet, um die kaskadierte Dosierung des Reaktors nach Massgabe des Sensorsignals des mindestens einen Temperatursensors zu steuern.

Ein einziger Temperatursensor ermöglicht bereits eine kontinuierliche Überwachung der Reaktion. Werden mehrere, in Strömungsrichtung hintereinander angeordnete Temperatursensoren verwendet, ermöglichen sie zudem, den Ort des Zündens der Reaktion zu erkennen.

Bei polytroper Reaktionsführung wird die Reaktion weder adiabatisch noch isotherm durchgeführt und die Temperatur ändert sich deshalb entlang der Reaktorabschnitte bzw. sie ist messbar unterschiedlich. Anhand dieser Änderung kann der Ort des Zündens überwacht werden, was zu einer zusätzlichen Sicherheit in der Reaktionsführung führt.

Es empfiehlt sich deshalb eine genaue Temperaturmessung. Wie diese erfolgen kann, ist beispielsweise in WO 2017/080909 A1 ausführlich beschrieben. Ein Hinweis wie die Temperaturmessung vom kleinen Versuchsreaktor auf eine Industrieanlage skaliert werden kann, ist ebenfalls in dieser Publikation zu finden.

Je nach Ausführungsform sind die Temperatursensoren einzelne und voneinander getrennte Bauteile oder sie sind in einem gemeinsamen Schutzrohr angeordnet.

Vorzugsweise weist die Steuerung eine Auswerteinheit auf, die die Signale mehrerer Temperatursensoren auswertet und den Ort der Zündung im Reaktor bestimmt. Diese Information lässt sich, wie oben bereits erwähnt, für die Rückführungsrate und die kaskadierte Dosierrate, d.h. die Zuführung von Additiven bzw. die partielle Stoffzuführung, verwenden. Ferner lässt sich die Edukt-Zuführung steuern oder abschalten, insbesondere durch den Einlauf, und/oder eine Notspülung kann ausgelöst werden und/oder Sicherheitsventile können aktiviert werden.

Vorteilhaft ist ferner, dass die Rückführung bzw. der sich über den gesamten Reaktor ersteckende Kreislauf dank der Verdünnung die Temperaturkontrolle unterstützt.

In bevorzugten Ausführungsformen ist mindestens ein Mittel vorhanden ist, das im Reaktor einen Temperaturanstieg über einen vordefinierten Temperaturbereich verhindert. Vorzugsweise umfasst das mindestens eine Mittel die bereits erwähnte Steuerung und den mindestens einen Temperatursensor. Der vordefinierte Temperaturbereich, der nicht übertroffen werden sollte, ist vorzugsweise 100 K bzw. 100°C, noch bevorzugter sollte die Temperatur nicht um mehr 50 K bzw. um nicht mehr als 50°C steigen.

Vorzugsweise ist ein Fördermittel, vorzugsweise eine Förderpumpe oder ein Gebläse, vorhanden. Das Fördermittel kann in der Rückführungsleitung oder in der Prozessleitung angeordnet sein. Die Rückführungsrate in der Rückführungsleitung lässt sich über eine Pumpenkennlinie der Förderpumpe steuern. Alternativ lässt sie sich beispielsweise mittels eines Durchflussmessers steuern.

Vorzugsweise ist zwischen Reaktor und Auslass ein Druckhaltemittel vorhanden. Dies verhindert ein Verdampfen der Stoffe.

In bevorzugten Ausführungsformen sind mindestens ein Sicherheitsventil und/oder mindestens eine Berstscheibe im Einlauf und/oder pro Reaktorabschnitt bzw. -segment und/oder in der Rückführleitung vorhanden. Diese dienen als weitere Schutzebene.

In einer Ausführungsform ist nur eine einzige Rückführungsleitung vorhanden, die sich über den gesamten Reaktor erstreckt. In anderen Ausführungsformen ist innerhalb dieses Kreislaufes mindestens ein weiterer, kleinerer Kreislauf vorhanden. Hierzu ist mindestens eine weitere Rückführungsleitung zur Rückführung eines weiteren Teilstroms in den Reaktor vorhanden, wobei die weitere Rückführungsleitung von einer dritten Stelle, die sich innerhalb des Reaktors befindet, zu einer vierten Stelle führt, die in Strömungsrichtung oberhalb der dritten Stelle befindet. Die vierte Stelle kann identisch mit der ersten Stelle sein und sich somit zwischen Einlauf und Reaktor befinden. Sie kann sich jedoch auch innerhalb des Reaktors befinden. Vorzugsweise ist dieser kleinere Kreislauf im oberen Strömungsbereich angeordnet. Vorzugsweise umfasst er mindestens den ersten Reaktorabschnitt.

Sind mehrere weitere Rückführungsleitungen vorhanden, so sind ihre dritten und vierten Stellen vorzugsweise unterschiedlich. D.h. sie starten und enden vorzugsweise in unterschiedlichen Bereichen des Kreislaufes.

Das erfindungsgemässe Verfahren zur Durchführung einer nicht-selektiven chemischen Reaktion in einem kontinuierlichen Prozess mit mindestens teilweiser polytroper Reaktionsführung wird vorzugsweise mit der oben beschriebenen erfindungsgemässen Vorrichtung durchgeführt. Im Verfahren wird ein Materialstrom von einem Einlauf kontinuierlich durch einen Reaktor mit mindestens zwei in Serie geschalteten, eine Strömungsrichtung definierenden Reaktorabschnitten zu einem Auslauf geführt. Dem Materialstrom wird dabei über eine mindestens eine Zuleitung kaskadiert Material zugeführt. Der Materialstrom ist dabei mindestens in einem der mindestens zwei Reaktorabschnitt ein Plug-Flow-Strom. Ein Teil des Materialstroms wird während der Reaktion und/oder als Schutzmassnahme zurückgeführt, wobei der Teil des Materialstroms von einer ersten Stelle, die sich zwischen dem Reaktor und dem Auslauf befindet, zu einer zweiten Stelle, die sich zwischen dem Einlauf und dem Reaktor befindet, zurückgeführt wird.

In einer bevorzugten Variante des Verfahrens weist die nicht-selektive Reaktion eine Hauptreaktion und mindestens eine Nebenreaktion auf, wobei die Hauptreaktion eine tiefere Reaktionsordnung aufweist als die mindestens eine Nebenreaktion.

Bei Reaktoren mit Plug-Flow-Eigenschaften und einer partiellen Rückführung bei geringen Rückführraten sind eine hohe Selektivität und eine hohe Produktequalität gewährleistet. Ein gezündeter Reaktor, der sich polytrop verhält, kann sehr gut mit Temperatursensoren entlang der Reaktorstrecke überwacht werden. Es hat sich jedoch gezeigt, dass sich das Verweilzeitverhalten bei einer Rückführrate ab 2 erheblich verschlechtert und sich kaum mehr noch von den Rückführraten 3,4,5 unterscheidet.

Beim Auslegen des erfindungsgemässen Reaktors sowie beim Durchführen des erfindungsgemässen Verfahrens werden vorzugsweise die hohen Temperaturunterschiede durch die kaskadierte Dosierung eingestellt und andererseits wird die Rückführrate so klein wie möglich gehalten, um eine verringerte Selektivität und eine schlechte Produktqualität zu verhindern. Der Temperaturverlauf wird somit vorzugsweise primär bei nicht- selektiven Reaktionen über die Anzahl der Kaskaden und die Kühlleistung des Reaktors eingestellt. Vorzugsweise wird deshalb im Produktionsbetrieb eine Rückführrate, d.h. ein Verdünnungsfaktor, von kleiner als 3, bevorzugter von kleiner als 2 und besonders bevorzugt von kleiner/gleich 1 oder kleiner 1 gewählt. Dies verhindert ein sich in nicht-selektiven Reaktionen negativ auswirkendes breites Verweilzeitspektrum bei hohen Kreislaufraten. Breite Verweilzeitspektren führen dazu, dass Berechnungen und Voraussagen erschwert oder verunmöglicht sind.

Im Notfall wird die Kreislaufrate massiv erhöht, da ein hoher Kreislauf alles verdünnt und die Wärme sehr gut abgeführt werden kann. Im Notfall ist die Kreislaufrate vorzugsweise grösser 2, besonders bevorzugt grösser 5.

Vorzugsweise dient der Kreislauf lediglich als Notfall-Aggregat, d.h. er bildet die ereignisverhindernde Schutzebene. Es hat sich jedoch gezeigt, dass eine geringe Kreislaufrate, d.h. eine kleine Zirkulation, während des Produktionsbetriebs, die Funktionsfähigkeit dieses Notfall-Aggregats gewährleistet, da dadurch ein Verhocken bzw. Festsitzen der Pumpe und ein Verstopfen der Leitungen des Rückrührkreislaufs verhindert werden. Vorzugsweise ist die Kreislaufrate bzw. Rückführrate im Produktionsbetrieb kleiner oder gleich 0.1. In weiteren bevorzugten Varianten ist die Rückführrate kleiner oder gleich 0.01. Eine optimale Rückführrate wird vorzugsweise im Laborbetrieb untersucht und definiert.

In anderen Varianten des Verfahrens und der Vorrichtung ist der Kreislauf im Produktionsbetrieb vollständig ausgeschaltet, d.h. die Kreislaufrate ist 0. Um die Funktionsweise des Kreislaufes im Notfall zu gewährleisten, sind allfällige Toträume, erzeugt durch Absperrarmaturen, Rückschlagventile oder Einspritzventile bzw. Düsen, durch entsprechende Wahl und Anordnung der einzelnen Bauteile vorzugsweise zu verhindern oder zumindest auf ein Minimum zu reduzieren.

Erfindungsgemäss wird ein kontinuierlich betriebener, kaskadierten PFR Reaktor, auch CCR Reaktor genannt, mit mindestens, bevorzugter mit genau drei Schutzebenen betrieben, wobei vorzugsweise das polytrope Temperaturprofil klein gehalten wird und das Verweilzeitverhalten über kaskadierten Impfstellen eingestellt wird. Dabei dient der Kreislauf als Notfall-Aggregat und seine Kreislaufrate kann im Notfall sofort massiv erhöht werden, um ein Durchgehen einer Reaktion zu verhindern.

Die hieraus entstehenden Vorteile und die möglichen Varianten der Verfahrensschritte wurden bereits oben im Text anhand der Vorrichtung beschrieben. Sie gelten auch für das Verfahren.

Der erfindungsgemässe Reaktor kann beispielweise für folgende Reaktionen eingesetzt werden:

- Sämtliche nicht-selektive Reaktionen, bei denen die erwünschte Reaktion eine tiefere Ordnung als die unerwünschte Nebenreaktion besitzt, beispielsweise Ethoxilierungen, Hydrosililierungen, Veresterungen, Nitrierungen, Diazotierungen, Umlagerungen, Alkylierungen, Halogenierungen, Hydrierungen, Oxidierungen, Polymerisationen wie beispielweise radikalische, ionische, anionische oder lebende, Polyadditionen, Polykondensationen, etc.
- Gas-Flüssig-Reaktionen, wobei sich die Gasphase vorzugsweise vor der Rückführung separieren und am Eintritt wieder zugeben lässt.

Weitere Ausführungsformen und Varianten sind in den abhängigen Ansprüchen angegeben.

KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:

Figur 1 eine schematische Darstellung einer erfindungsgemässen Vorrichtung in einer ersten Ausführungsform;

Figur 2 eine schematische Darstellung der erfindungsgemässen Vorrichtung in einer zweiten Ausführungsform;

Figur 3 eine schematische Darstellung der erfindungsgemässen Vorrichtung in einer dritten Ausführungsform und

Figur 4 eine Verweilzeitsummenkurve eines Kreislaufreaktors.

BESCHREIBUNG BEVORZUGTER AUSFÜHRUNGSFORMEN

In Figur 1 ist ein erstes Ausführungsbeispiel eine erfindungsgemässe Vorrichtung dargestellt. Sie weist einen Reaktor mit mindestens zwei, vorzugsweise mit mehreren Reaktorabschnitten 1 auf, wobei vorzugsweise mindestens einige der Reaktorabschnitte 1 statische Mischer-Wärmetauscher und/oder statische Mischer sind.

Die Reaktorabschnitte 1 lassen sich dadurch charakterisieren, dass vorzugsweise in ihnen jeweils andere Prozessbedingungen als in den unmittelbar benachbarten Reaktorabschnitten 1 vorherrschen und/oder andererseits, dass die Reaktorabschnitte 1 vorzugsweise unterschiedliche Geometrien und Querschnitte aufweisen. Mindestens ein Reaktorabschnitt, vorzugsweise alle Reaktorabschnitte 1 weisen zumindest teilweise Plug-Flow Verhalten auf. Vorzugsweise weist mindestens ein Teil der Reaktorabschnitte 1 über ihre gesamte Länge Plug-Flow Verhalten bzw. Eigenschaften auf.

Die Vorrichtung besitzt mindestens einen Einlauf 3 für die Feedströme und mindestens einen Auslauf 4. Der Reaktor ist zwischen dem Einlauf 3 und dem Auslauf 4 angeordnet.

Eine Rückführungsleitung 14 führt von einer ersten Stelle, die zwischen dem Reaktor, insbesondere dem in Strömungsrichtung letzten Reaktorabschnitt 1, und dem Auslauf 4 liegt, zu einer zweiten Stelle, die zwischen dem Einlauf 3 und dem Reaktor, insbesondere dem in Strömungsrichtung ersten Reaktorabschnitt 1, liegt. Dadurch ist ein Kreislauf gebildet und die Vorrichtung bildet einen Kreislaufreaktor aus.

Entlang des Kreislaufes besitzt die Vorrichtung beliebig viele Zuleitungen 2, auch Impfstellen genannt. Diese Zuleitungen 2 dienen der Zuführung von zusätzlichen Feedströmen, wie eingangs erwähnt.

Vorzugweise weist jeder Reaktorabschnitt 1 mindestens eine Zuleitung 2 auf. Vorzugsweise wird vor jedem Reaktorabschnitt 1 der reaktive Feed dosiert, so dass ein polytropes Temperaturprofil entsteht.

Die Vorrichtung weist ferner mindestens einen Temperatursensor 6 auf. Vorzugsweise ist mindestens ein Temperatursensor 6 pro Reaktorabschnitt 1 vorhanden. Noch bevorzugter sind mehrere, insbesondere mindestens fünf, Temperatursensoren 6 pro Reaktorabschnitt 1 vorhanden.

Diese mehreren Temperatursensoren 6 pro Reaktorabschnitt 1 ermöglichen eine Messung des polytropen Temperaturprofils, welches zur Steuerung und Überwachung dient.

Die Temperatursensoren 6 sind vorzugsweise Thermoelemente oder PT100. Besonders bevorzugt sind axiale Mehrfach-Temperatursensoren, die das Temperaturprofil axial entlang des Reaktorabschnitts 1 messen. Alternativ lassen sich beispielsweise Fibre Bragg Sensoren verwenden.

Mindestens ein Reaktorabschnitt 1, vorzugsweise der erste oder einer der ersten Reaktorabschnitte 1, wird zwecks Temperierung, d.h. Erwärmung oder Kühlung, von einem Wärmeträgermedium durchströmt. Im Folgenden wird das Wärmeträgermedium auch als HTM (Heat Transfer Medium) bezeichnet. Die Versorgung des Wärmeträgermediums bzw. der Wärmeträgermedien in den Reaktorabschnitten 1 erfolgt vorzugsweise separat oder zusammen in Serie geschaltet. Die HTM Versorgung ist in den Figuren nicht dargestellt, da sie aus dem Stand der Technik bekannt ist.

Der mindestens eine Reaktorabschnitt 1 weist vorzugsweise einen temperierten statischen Mischer oder Mischer-Wärmetauscher auf. Vorzugsweise weist der Mischer-Wärmetauscher innen liegende Kühlrohre auf, wobei der statische Mischer oder der Mischer-Wärmetauscher vom oben genannten Wärmeträgermedium durchströmbar ist. Derartige Mischer-Wärmetauscher sind beispielsweise unter dem Namen Fluitec CSE-XR Mischer-Wärmetauscher auf dem Markt bekannt.

Eine besondere Eigenschaft von statischen Mischern und Mischer-Wärmetauschern ist, dass sie bei stationären Bedingungen einen konstanten Wärmedurchgangskoeffizienten k aufweisen und der Temperaturverlauf des Wärmeträgermediums somit annähernd linear ist.

Die Vorrichtung weist vorzugsweise ein Druckhaltemittel 7 auf. Sie ist vorzugsweise auslaufseitig angeordnet, wobei sie sich in Strömungsrichtung nach dem Reaktor und vorzugsweise auch nach der ersten Stelle, d.h. der Abzweigung der Rückführleitung 14, befindet.

Als Druckhaltemittel 7 eignen sich beispielsweise bekannte Regelventile, Überströmventile oder pneumatisch geregelte Membranventile.

Vorzugsweise ist ein Fördermittel 5 vorhanden, der den Kreislauf antreibt. Das Fördermittel 5 ist vorzugsweise eine Pumpe oder ein Gebläse. Es können auch mehrere Pumpen oder Gebläse verteilt über den Kreislauf angeordnet sein. das Fördermittel 5 ist in diesem Beispiel in der Rückführungsleitung 14 angeordnet. Sie kann jedoch auch in der Hauptförderleitung, d.h. zwischen Einlauf 3 und Auslauf 4 angeordnet sein, wie dies in Figur 2 erkennbar ist.

Vorzugweise wird das Fördermittel 5 mit einem Frequenzumrichter geregelt. Besonders bevorzugt weist das Fördermittel 5 einen hier nicht separat dargestellten Durchflussmesser auf, um den Durchfluss zu überwachen.

Das Fördermittel 5 lässt sich gemeinsam mit dem Kreislauf bzw. der Rückführungsleitung 14 als Schutzebene einsetzen. Dies ist beispielsweise der Fall, wenn das Fördermittel 5 bei Abweichungen vom Normalbetrieb die Förderrate im Kreislauf unmittelbar erhöht und so sowohl die Kühlleistung als auch die Verdünnung erhöht. Die Kreislaufrate kann sehr klein gewählt werden, so dass sich die Vorrichtung einem CCR Reaktor-System annähert. Auf dieses Weise wird der Kreislauf, genauer die Rückführleitung, lediglich als Schutzebene eingesetzt.

Werden zudem die Zuleitungen 2 zumindest teilweise stoppt, lässt sich die Reaktion gefahrlos unterbrechen. Das Fördermittel in Kombination mit dem Kreislauf lässt sich gemäss EN 61511 als vollwertige ereignisverhindernden Schutzebene eingesetzt werden.

Die Vorrichtung weist vorzugsweise mindestens eine schadensbegrenzende Schutzebene auf. Sie ist in den Figuren schematisch dargestellt und mit dem Bezugszeichen 9 versehen. Derartige schadensbegrenzende Schutzebenen sind Sicherheitsventile und/oder Berstscheiben. In dem in Figur 1 dargestellten Ausführungsbeispiel ist diese Schutzebene 9 zwischen dem Einlauf 3 dem in Strömungsrichtung ersten Reaktorabschnitt 1 angeordnet. In der Ausführungsform gemäss Figur 2 befindet sie sich nach dem letzten Reaktorabschnitt 1 in der Rückführungsleitung 14.

Die Vorrichtung weist optional eine weitere erste ereignisverhindernde Schutzebene auf, die schematisch dargestellt und mit den Bezugszeichen 10 versehen ist. Es ist beispielsweise eine Notspülung, wie sie in EP 3 417 935 B1 beschrieben und auf dem Markt als Fluitec Safety Purge System bekannt ist. In dem in Figur 1 dargestellten Ausführungsbeispiel ist diese Schutzebene 10 zwischen dem Einlauf 3 dem ersten Reaktorabschnitt 1 angeordnet. In der Ausführungsform gemäss Figur 2 befindet sie sich im mittleren Bereich der Hauptleitung zwischen Einlauf 3 und Auslauf 4.

In der Ausführungsform gemäss Figur 2 ist eine optionale zweite ereignisverhindernde Schutzebene 11 vorhanden, die ebenfalls lediglich schematisch dargestellt ist. Diese zweite Schutzebene 11 ist vorzugsweise eine Notkühlung, die schnellstmöglich das HTM Medium auf eine Kaltversorgung umschaltet. Dazu wird das HTM Medium vorzugsweise über Ventile umgeschaltet, wodurch schnellstmöglich ein kühles Medium durch die HTM Versorgung fliesst. Damit wird die Reaktion gestoppt oder zumindest so verlangsamt, dass es zu keinem Run-away Szenario kommen kann.

Alternativ oder zusätzlich wird eine weitere ereignisverhindernde Schutzebene eingesetzt. Diese ist beispielsweise die Zugabe eines Reaktion-Stoppers. Diese lässt sich durch ein Umschalten der reaktiven Feedströme auf reaktionsstoppende Feedströme erreichen. Vorzugsweise werden dann die zumindest teilweise die Feedströme über die Impfstellen, d.h. die Zuleitungen 2, umgeschaltet.

Am Auslauf 4 des Kreislaufreaktors ist in allen dargestellten Ausführungsbeispielen vorzugsweise mindestens eine Qualitätsüberwachungssonde 8 angeordnet. Diese Qualitätsüberwachungssonde 8 führt beispielsweise eine pH-Wert Messsonde, eine Infrarot-Spektralmesssonde oder eine NIR (near infrared) Sonde 8.

Die Qualitätsüberwachungssonde 8 überwacht kontinuierlich die Qualität des Reaktionsproduktes im Bereich des Auslaufs 4 der Vorrichtung, wobei die Qualität sich auf die Umsetzung eines oder aller Edukte oder

eine spezifizierte Eigenschaft des Produktes, wie Reinheit oder Selektivität bezüglich einer Zielsubstanz, beziehen kann.

In Figur 3 ist ein drittes Ausführungsbeispiel der erfindungsgemässen Vorrichtung dargestellt. Sie ist fast identisch wie das in Figur 2 gezeigte Ausführungsbeispiel aufgebaut. Sie weist jedoch mindestens einen zusätzlichen partiellen Kreislauf mit einer Verbindungsleitung auf, die eine zweite Rückführungsleitung 12 bildet. Der partielle Kreislauf verbindet eine dritte Stelle innerhalb des Reaktors mit einer vierten Stelle, die sich stromaufwärts zur dritten Stelle befindet. Vorzugsweise ist die vierte Stelle ebenfalls innerhalb des Reaktors. Alternativ liegt sie zwischen dem Einlauf 3 und dem in Strömungsrichtung ersten Reaktorabschnitt 1. Ist ein Fördermittel 5 in der Hauptströmungsleitung zwischen Einlauf 3 und Auslauf 4 vorhanden, so befindet sich die vierte Stelle vorzugsweise in Strömungsrichtung oberhalb des Fördermittels 5. Dies ist in Figur 3 erkennbar. Die Strömungsrichtung ist in Figur 3 mit einem Pfeil auf der linken Seite der Figur gekennzeichnet.

Der Ort der Verbindungsleitung bzw. der zweite Rückführungsleitung 12, kann wie erwähnt beliebig gewählt werden. Vorzugweise wird der partielle Kreislauf zwischen dem Fördermittel 5 und dem ersten oder zweiten Reaktorabschnitt 1 positioniert. Um die Funktion des partiellen Kreislaufes sicherzustellen, ist vorzugsweise ein Differenzdruck über die zweite Rückführungsleitung 12 nötig. Der benötigte Differenzdruck lässt sich mittels einer zusätzlichen Differenzdruckregelung 13 erreichen, die vorzugsweise in der zweiten Rückführungsleitung 12 angeordnet ist.

Die Differenzdruckregelung 13 ist beispielsweise eine Blende, ein Regelventil, ein Gebläse oder eine Pumpe. Vorzugsweise wird die Differenzdruckregelung 13 mit einer geregelten Pumpe mit Frequenzumrichter gewährleistet. Besonders bevorzugt weist die Pumpe zudem einen Durchflussmesser auf, um den Durchfluss zu überwachen.

Wie eingangs erwähnt lässt sich die Produktqualität vom Prozessentwickler oder vom Betreiber einstellen.

Will der Prozessentwickler aus Kostengründen die Selektivität optimieren, um möglichst alles Edukt so einfach und schnell wie möglich zum gewünschten Produkt reagieren zu lassen, so muss er sich mit diesem Optimierungsparametern auseinandersetzten und den Einfluss dieser Parameter betrachten. Bevor man jedoch eine richtige Aussage über die Verbesserung der Selektivität treffen kann, braucht man die kinetischen Daten oder Versuche, beispielsweise in skalierbaren Contiplant Reaktoren der Firma Fluitec mixing + reaction solutions AG. Diese Contiplant Reaktoren sowie die Flow Kalorimeter derselben Firma ermöglichen auch die kostenoptimierte Wahl der Anzahl Impfstellen sowie die optimale Wahl der Rückführrate bzw. der Kreislaufrate im Produktionsbetrieb für eine spezifische Reaktion.

Figur 4 zeigt die Verweilzeitsummenkurve eines Kreislaufreaktors mit einer Bodenstein-Zahl von 100. Dies bedeutet, dass sich das Verweilzeitspektrum an ein Plug-Flow Verhalten (PFR) annähert. Die Kurven 5,6,7 nähern sich überraschend stark an. Überraschend deshalb, weil sich die Rückführraten von 2 bis 5 erheblich unterscheiden. Messungen haben zudem gezeigt, dass das Verhalten bei einer Bodenstein-Zahl von 50 vergleichbar ist.

Wie bereits eingangs dargelegt, dient der Kreislauf vorzugsweise als ereignisverhindernder Schutzebene und wird im Produktionsbetrieb nicht oder nur mit einer sehr kleinen Rückführungsrate betrieben. Dadurch lassen sich nicht selektive Reaktionen sicher kontrollieren. Dies betrifft insbesondere Reaktionen mit einem Zersetzungspotential und Reaktionen mit Nebenreaktionen. Beide Reaktionstypen können sowohl selektiv als auch nicht selektiv und gefährlich sein. Derartige Reaktionen erfordern deshalb ein Sicherheitskonzept, welches vereinfacht wie folgt aufgebaut ist:

- mindestens eine schadensbegrenzenden Schutzeinrichtung und
- mindestens ein bis zwei ereignisverhindernde Schutzeinrichtungen.

Ein sicherer, kontinuierlicher Betrieb von derartigen Reaktionen ist möglich, wenn die Vorrichtung mindestens zwei, vorzugsweise mindestens drei Schutzebenen aufweist. Drei Schutzebenen gelten insbesondere nach Stoessel für Klasse 4 und 5 Reaktionen. Zwei Schutzebenen für die Klassen 2 bis 3.

Aus dem Dokument von BGI, Anlagensicherheit, Maßnahmen der Prozesssicherheit in verfahrenstechnischen Anlagen, R 002, Stand: Dezember 2015, (Redaktionelle Überarbeitung der Ausgabe 7/2014) werden mehr als sieben Maßnahmen beschrieben.

Für einen kontinuierlichen Prozess werden gemäss der Erfindung vorzugsweise verwendet:

- Berstscheiben und Sicherheitsventile als erste Schutzebene
- die Not-Spülung als zweite Schutzebene
- ein Kreislauf über eine Kaskade mit Temperatursensoren als dritte Schutzeben.

Die gewählten zwei ereignisverhindernden Schutzeinrichtungen lassen sich in weniger als einer Sekunde aktivieren. Auch aus diesem Grund sind sie für kontinuierliche Prozesse bestens geeignet.

Die erfindungsgemässe Vorrichtung kombiniert eine kaskadierte Reaktoranordnung mit einem Kreislaufreaktor, der sich über die gesamte Reaktoranordnung erstreckt.

BEZUGSZEICHENLISTE

1 Reaktorabschnitt
2 Zuleitung
3 Einlauf
4 Auslauf
5 Fördermittel
6 Temperatursensor
7 Druckhaltemittel
8 auslaufseitige Qualitätsüberwachung
9 schadensbegrenzende Schutzebene
10 erste ereignisverhindernde Schutzebene
11 zweite ereignisverhindernde Schutzebene
12 zweite Rückführungsleitung
13 Differenzdruckregelung
14 Rückführungsleitung

**Patentansprüche**

**1.** Vorrichtung zur Durchführung einer nicht-selektiven chemischen Reaktion in einem kontinuierlichen Verfahren mit mindestens teilweiser polytroper Reaktionsführung, wobei die Vorrichtung einen Einlauf (3), einen Auslauf (4) und einen zwischen dem Einlauf (3) und dem Auslauf (4) angeordneten Reaktor aufweist, wobei der Reaktor mindestens zwei in Serie geschaltete Reaktorabschnitte (1) aufweist, welche eine Strömungsrichtung definieren,

wobei der Reaktor mindestens teilweise Plug-Flow Eigenschaften in Strömungsrichtung aufweist,
wobei mindestens eine Zuleitung (2) für eine kaskadierte Dosierung des Reaktors vorhanden ist,
wobei eine Rückführungsleitung (14) zur Rückführung eines Teilstroms in den Reaktor vorhanden ist und
wobei die Rückführungsleitung (14) von einer ersten Stelle, die sich zwischen dem Reaktor und dem Auslauf (4) befindet, zu einer zweiten Stelle, die sich zwischen dem Einlauf (3) und dem Reaktor befindet, führt,
wobei die Rückführungsleitung (14) mindestens als Schutzmassnahme im Notfall ausgebildet ist.

**2.** Vorrichtung nach Anspruch 1, wobei der Reaktor mindestens zwei, vorzugsweise mindestens drei Schutzebenen aufweist.

**3.** Vorrichtung nach einem der Ansprüche 1 oder 2, wobei mindestens einer der mindestens zwei Reaktorabschnitte ein statischer Mischer-Wärmetauscher ist.

**4.** Vorrichtung nach einem der Ansprüche 1 bis 3, wobei mindestens ein Temperatursensor (6) vorhanden ist, der die Temperatur im Reaktor bestimmt und wobei eine Steuerung vorhanden ist zur Steuerung der Vorrichtung nach Massgabe eines Sensorsignals des mindestens einen Temperatursensors (6), wobei vorzugsweise mindestens ein Reaktorabschnitt (1), vorzugsweise jeder Reaktorabschnitt (1) einen Temperatursensor (6) aufweist.

**5.** Vorrichtung nach Anspruch 4, wobei die Steuerung ausgebildet ist, um eine Rückführungsrate des Teilstroms im Reaktor nach Massgabe des Sensorsignals des mindestens einen Temperatursensors (6) zu steuern.

**6.** Vorrichtung nach einem der Ansprüche 4 oder 5, wobei die Steuerung ausgebildet ist, um die kaskadierte Dosierung des Reaktors nach Massgabe des Sensorsignals des mindestens einen Temperatursensors (6) zu steuern.

**7.** Vorrichtung nach einem der Ansprüche 1 bis 6, wobei mindestens ein Mittel vorhanden ist, das im Reaktor einen Temperaturanstieg über einen vordefinierten Temperaturbereich verhindert, wobei das mindestens eine Mittel vorzugsweise die Steuerung und den mindestens einen Temperatursensor (6) umfasst.

**8.** Vorrichtung nach einem der Ansprüche 1 bis 7, wobei ein Fördermittel (5), vorzugsweise eine Förderpumpe oder ein Gebläse, vorhanden ist.

**9.** Vorrichtung nach einem der Ansprüche 1 bis 8, wobei zwischen Reaktor und Auslass ein Druckhaltemittel (7) vorhanden ist.

**10.** Vorrichtung nach einem der Ansprüche 1 bis 9, wobei mindestens ein Sicherheitsventil und/oder Berstscheiben im Einlauf (3) und/oder pro Reaktorabschnitt (1) vorhanden sind.

**11.** Vorrichtung nach einem der Ansprüche 1 bis 10, wobei mindestens eine weitere Rückführungsleitung (12) zur Rückführung eines weiteren Teilstroms in den Reaktor vorhanden ist und
wobei die mindestens eine weitere Rückführungsleitung (12) von einer dritten Stelle, die sich innerhalb des Reaktors befindet, zu einer vierten Stelle führt, die in Strömungsrichtung oberhalb der dritten Stelle befindet.

**12.** Verfahren zur Durchführung einer nicht-selektiven chemischen Reaktion in einem kontinuierlichen Prozess mit mindestens teilweiser polytroper Reaktionsführung, vorzugsweise mit einer Vorrichtung gemäss einem der Ansprüche 1 bis 11,

wobei ein Materialstrom von einem Einlauf kontinuierlich durch einen Reaktor mit mindestens

zwei in Serie geschalteten, eine Strömungsrichtung definierenden Reaktorabschnitten zu einem Auslauf geführt wird,
wobei dem Materialstrom über eine mindestens eine Zuleitung kaskadiert Material zugeführt wird,
wobei der Materiastrom mindestens in einem der mindestens zwei Reaktorabschnitt ein Plug-Flow-Strom ist,
wobei ein Teil des Materialstroms während der Reaktion und/oder als Schutzmassnahme zurückgeführt wird, wobei der Teil des Materialstroms von einer ersten Stelle, die sich zwischen dem Reaktor und dem Auslauf befindet, zu einer zweiten Stelle, die sich zwischen dem Einlauf und dem Reaktor befindet, zurückgeführt wird
wobei die Rückführung mindestens im Notfall erfolgt.

**13.** Verfahren nach Anspruch 12, wobei die Rückführung während eines Produktionsbetriebs eine Rückführrate von kleiner als 3, vorzugsweise kleiner als 2 und noch bevorzugter von kleiner/gleich 1 aufweist.

**14.** Verfahren nach einem der Ansprüche 12 oder 13, wobei das Verfahren im Produktionsbetrieb eine Rückführrate verwendet, welche Temperaturverläufe im Reaktor berücksichtigt und eine Selektivität verringernde Temperaturunterschiede minimiert.

**15.** Verfahren nach einem der Ansprüche 12 bis 14, wobei die nicht-selektive Reaktion eine Hauptreaktion und mindestens eine Nebenreaktion aufweist, wobei die Hauptreaktion eine tiefere Reaktionsordnung aufweist als die mindestens eine Nebenreaktion.

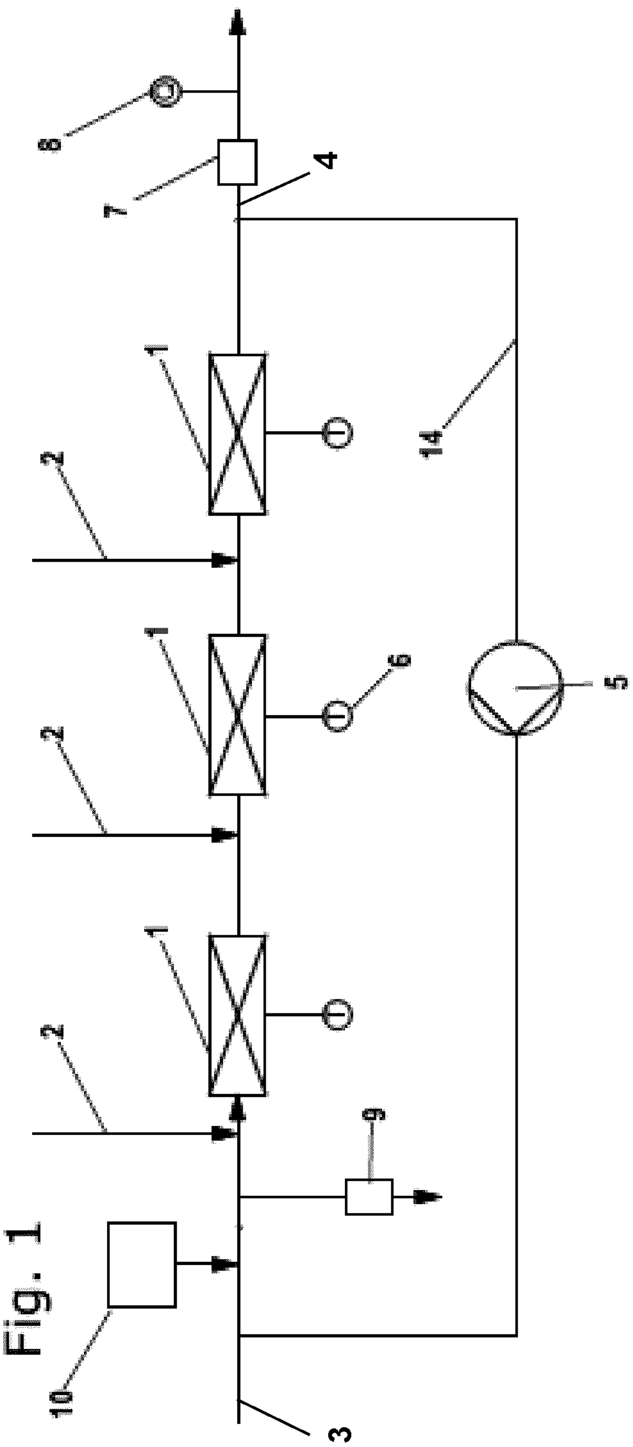


Fig. 1

Fig. 2

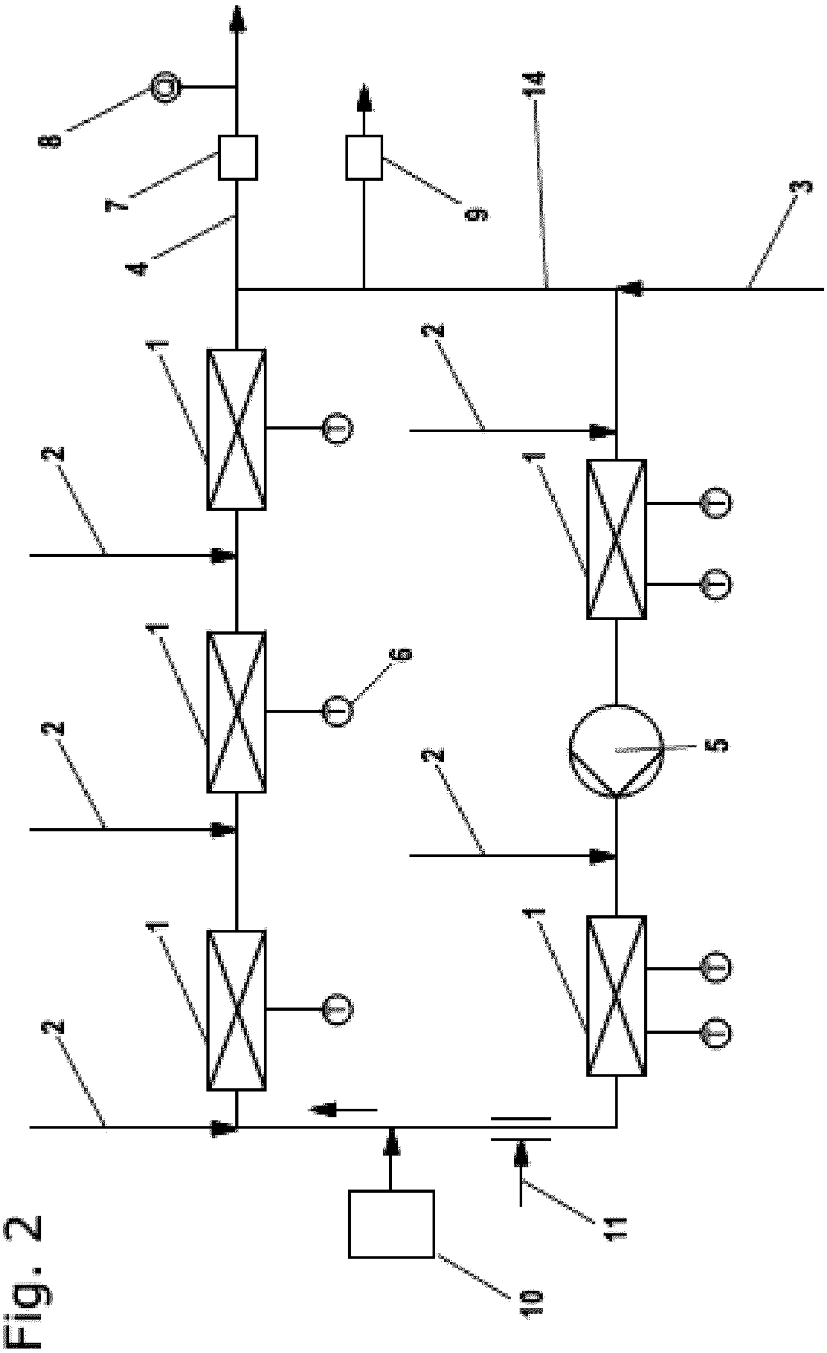

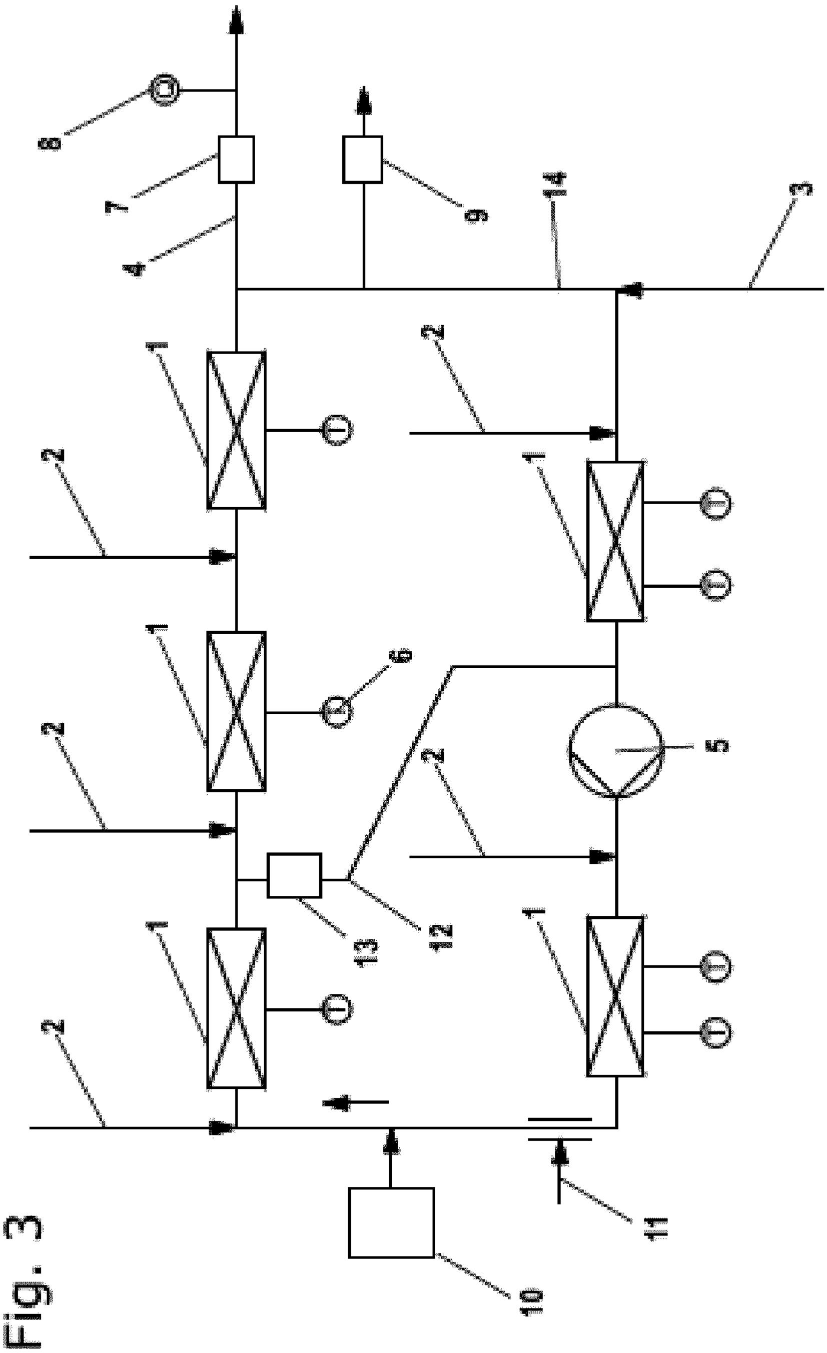


Fig. 3

Fig. 4

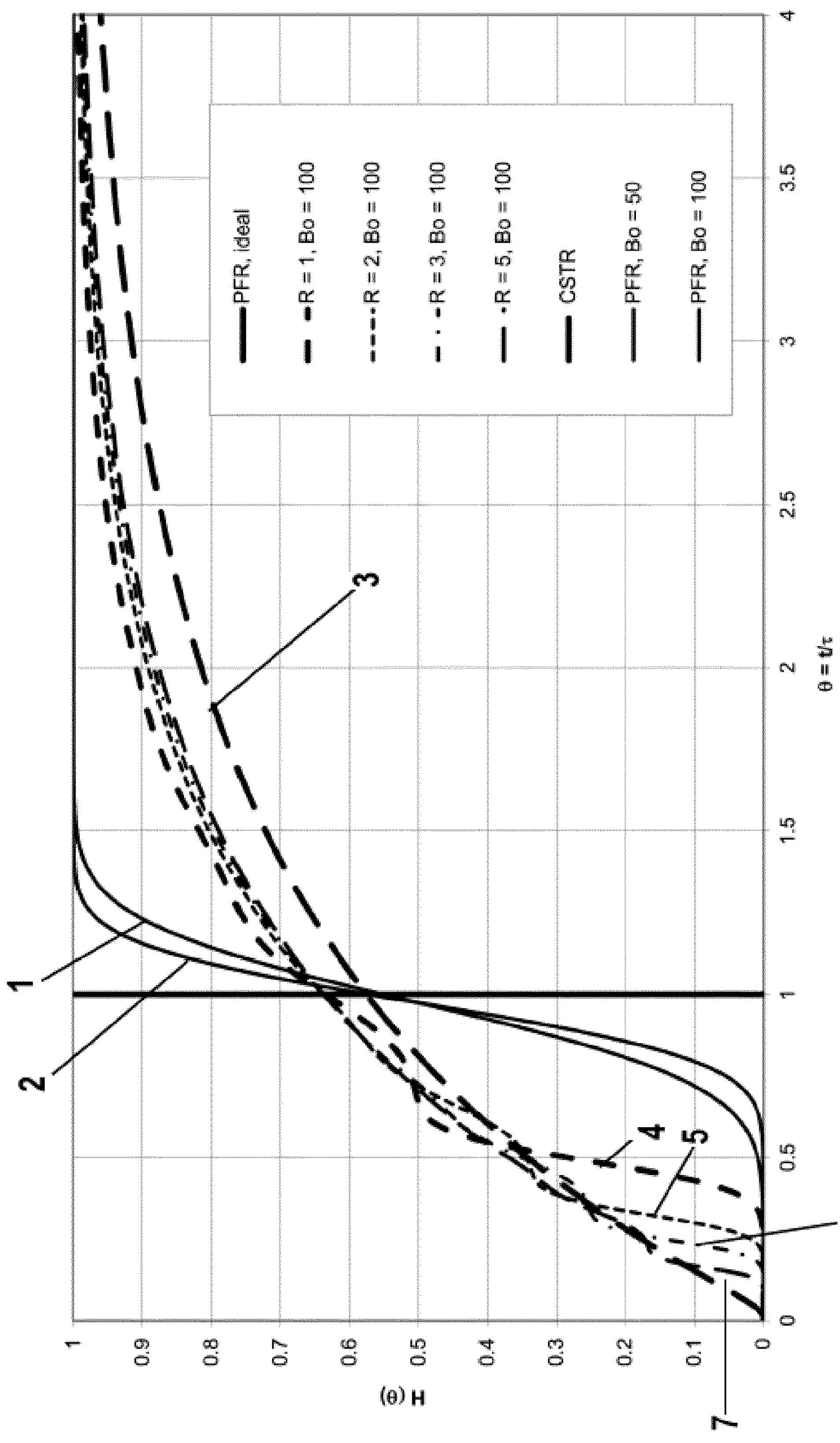

PFR, ideal
R = 1, Bo = 100
R = 2, Bo = 100
R = 3, Bo = 100
R = 5, Bo = 100
CSTR
PFR, Bo = 50
PFR, Bo = 100
H (θ)
θ = t/τ
0
0.1
0.2
0.3
0.4
0.5
0.6
0.7
0.8
0.9
1
0.5
1.5
2
2.5
3
3.5
4
1
2
3
4
5
6
7

Europäisches Patentamt
European Patent Office
Office européen des brevets

# EUROPÄISCHER RECHERCHENBERICHT

Nummer der Anmeldung
EP 23 18 0123

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br>Y<br>A | US 2012/116030 A1 (HEPPERLE JENS [DE] ET AL) 10. Mai 2012 (2012-05-10)<br>* Absätze [0027], [0038], [0041], [0042], [0048], [0049], [0050], [0074], [0082]; Abbildungen 2a, 3d *<br>----- | 1-10<br><br>11,13-15<br>12 | INV.<br>B01J4/00<br>B01J19/00 |
| X,D<br><br><br>Y | WO 2017/080909 A1 (FLUITEC INVEST AG [CH]; RUDOLF GMBH [DE])<br>18. Mai 2017 (2017-05-18)<br>* Seite 13, Zeile 1 - Seite 14, Zeile 7; Abbildung 3 *<br>* Seite 8, Zeilen 5-8 *<br>* Seite 17, Zeile 6 - Seite 18, Zeile 2 *<br>----- | 1-9,<br>11-15<br><br>11,13-15 | |
| X<br><br>A | EP 2 596 860 A1 (FLUITEC INVEST AG [CH])<br>29. Mai 2013 (2013-05-29)<br>* Anspruch 9; Abbildungen 1-2 *<br>----- | 1<br><br>2-15 | |
| Y | US 3 035 040 A (FINDLAY ROBERT A)<br>15. Mai 1962 (1962-05-15)<br>* Abbildung 1 *<br>----- | 11 | **RECHERCHIERTE SACHGEBIETE (IPC)** |
| Y | WO 89/04822 A1 (MALLINCKRODT INC [US])<br>1. Juni 1989 (1989-06-01)<br>* Abbildung 4 *<br>----- | 11 | B01J |
| A | WO 2014/170149 A1 (BASF SE [DE])<br>23. Oktober 2014 (2014-10-23)<br>* das ganze Dokument *<br>----- | 1-15 | |
| A,D | EP 3 417 935 B1 (FLUITEC INVEST AG [CH])<br>17. November 2021 (2021-11-17)<br>* das ganze Dokument *<br>----- | 1-15 | |
| A | EP 3 181 221 A1 (FLUITEC INVEST AG [CH])<br>21. Juni 2017 (2017-06-21)<br>* Abbildung 1 *<br>----- | 13-15 | |

Der vorliegende Recherchenbericht wurde für alle Patentansprüche erstellt

1

| Recherchenort | Abschlußdatum der Recherche | Prüfer |
|---|---|---|
| München | 9. Oktober 2023 | Borello, Ettore |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..................................................
& : Mitglied der gleichen Patentfamilie, übereinstimmendes Dokument

EPO FORM 1503 03.82 (P04C03)

# ANHANG ZUM EUROPÄISCHEN RECHERCHENBERICHT ÜBER DIE EUROPÄISCHE PATENTANMELDUNG NR.

EP 23 18 0123

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-10-2023

| Im Recherchenbericht angeführtes Patentdokument | Datum der Veröffentlichung | Mitglied(er) der Patentfamilie | Datum der Veröffentlichung |
|---|---|---|---|
| US 2012116030 A1 | 10-05-2012 | CN 102464788 A | 23-05-2012 |
| | | DE 102011085944 A1 | 10-05-2012 |
| | | GB 2485650 A | 23-05-2012 |
| | | TW 201237056 A | 16-09-2012 |
| | | US 2012116030 A1 | 10-05-2012 |
| WO 2017080909 A1 | 18-05-2017 | CN 108348888 A | 31-07-2018 |
| | | EP 3374077 A1 | 19-09-2018 |
| | | JP 6976245 B2 | 08-12-2021 |
| | | JP 2019500202 A | 10-01-2019 |
| | | SG 11201803824R A | 28-06-2018 |
| | | TW 201720520 A | 16-06-2017 |
| | | US 2018326393 A1 | 15-11-2018 |
| | | WO 2017080909 A1 | 18-05-2017 |
| EP 2596860 A1 | 29-05-2013 | CH 705823 A2 | 31-05-2013 |
| | | EP 2596860 A1 | 29-05-2013 |
| US 3035040 A | 15-05-1962 | KEINE | |
| WO 8904822 A1 | 01-06-1989 | AT E107625 T1 | 15-07-1994 |
| | | AU 2801189 A | 14-06-1989 |
| | | CA 1316531 C | 20-04-1993 |
| | | DE 3850413 T2 | 02-02-1995 |
| | | EP 0436534 A1 | 17-07-1991 |
| | | JP 2768777 B2 | 25-06-1998 |
| | | JP H03502196 A | 23-05-1991 |
| | | US 4918168 A | 17-04-1990 |
| | | WO 8904822 A1 | 01-06-1989 |
| WO 2014170149 A1 | 23-10-2014 | BR 112015024241 A2 | 18-07-2017 |
| | | CA 2899723 A1 | 23-10-2014 |
| | | CN 105143276 A | 09-12-2015 |
| | | EP 2986648 A1 | 24-02-2016 |
| | | JP 2016515657 A | 30-05-2016 |
| | | KR 20150143680 A | 23-12-2015 |
| | | MX 361798 B | 17-12-2018 |
| | | RU 2015148820 A | 19-05-2017 |
| | | US 2016075801 A1 | 17-03-2016 |
| | | WO 2014170149 A1 | 23-10-2014 |
| EP 3417935 B1 | 17-11-2021 | EP 3417935 A1 | 26-12-2018 |
| | | US 2018361343 A1 | 20-12-2018 |
| EP 3181221 A1 | 21-06-2017 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1067352 A
- WO 2008141472 A
- EP 2796195 A
- EP 2286904 A
- EP 2886567 A1
- CH 705823 B1
- EP 3417935 B1
- WO 2017080909 A1


### In der Beschreibung aufgeführte Nicht-Patentliteratur


- **VON PETER HUGO ; FERNANDO LOPEZ.** Umwandlung diskontinuierlicher chemischer Prozesse in eine kontinuierliche Prozessführung unter Verwendung mikrostrukturierter Reaktoren - Reaktionstechnik und Sicherheit. *Chem. Ing. Tech.,* 2009, vol. 81 (1-2
- **FRANCIS STOESSEL.** *Planning protection measures against runaway reactions using criticality classes,* 2008